# EUROPÄISCHE PATENTANMELDUNG

(11) **EP 3 100 607 A1**
(43) Veröffentlichungstag der Anmeldung: **07.12.2016**
(21) Anmeldenummer: 15170791.6
(22) Anmeldetag: 05.06.2015
(51) Int. Cl.: A01G 9/02

(54) **PFLANZTOPF**

(71) Anmelder: COMPO GmbH, 48157 Münster (DE)
(72) Erfinder: Christoffer, Michael, 48165 Münster (DE)
(74) Vertreter: Féaux de Lacroix, Stefan

(57) **Zusammenfassung**

Die Erfindung betrifft einen allseits geschlossenen, mit Pflanzsubstrat und/oder Blumenerde gefüllten Kunststoff-Pflanztopf, ein Verfahren zu seiner Herstellung und ein diesen Pflanztopf und ein separat beiliegendes Langzeitdüngemittel bildendes Set.

## Beschreibung

Die Erfindung betrifft einen allseits geschlossenen, mit Blumenerde/Pflanzsubstrat gefüllten Kunststoff-Pflanztopf und ein Verfahren zu seiner Herstellung und ein diesen Pflanztopf und ein separat beiliegendes Langzeitdüngemittel bildendes Set.

Es ist seit langem bekannt, Zier- oder Nutzpflanzen in Pflanztöpfen vorzuziehen oder zu halten. Dabei wird der Pflanztopf durch den Verbraucher mit separat gekaufter Pflanzerde oder Blumenerde befüllt, und in den so befüllten Pflanztopf wird entweder Saat eingebracht oder eine vorgezogene Pflanze mit Wurzelballen eingesetzt.

Die zu diesem Zweck benötigte Pflanzerde oder Blumenerde wird typischerweise in einer Folienverpackung in Gebindegrößen von mehreren Litern (2,5 - 80 L) vertrieben. Dabei wird die Pflanz- oder Blumenerde produktionsseitig in der Folienverpackung typischerweise komprimiert oder gebügelt, um ihren stabilen Transport zu gewährleisten und sie zudem palettierbar zu machen.

Zur Verwendung muss nach Aufreißen der Folienverpackung die Erde zunächst von Hand aufgelockert und sodann der benötigten Menge entnommen und in den Pflanztopf gefüllt werden.

Nicht benötigte Restmengen an Pflanzerde müssen entsorgt oder gelagert werden. Der gesamte Pflanzvorgang ist von Staub- oder Schmutzanfall begleitet, so dass er häufig nur im Freien durchgeführt wird.

Es gibt bereits Versuche, den Nachteilen dieses Vorgehens abzuhelfen.

Aus dem Stand der Technik sind beispielsweise Blumentöpfe von So-Mei-To bekannt (www.so-mei-to.de), die auch Gegenstand eines zugehörigen Gebrauchsmusters DE 20 2012 102 001 U1 und einer damit wortidentischen Patentanmeldung DE 10 2012 104 735 A1 sind.

Die Schutzrechte betreffen einen mit Blumenerde und gegebenenfalls Dünger gefüllten Pflanztopf, bei dem in der Blumenerde ein Hohlraum ausgebildet ist, in den der Wurzelballen einer Pflanze eingebracht werden kann. Der Hohlraum kann durch verdichtetes Substrat, beispielsweise Kokossubstrat, oder durch einen Kunststoffeinsatz stabilisiert sein. Beide Schutzrechte definieren im Hauptanspruch für den Pflanzbehälter das Vorliegen des Hohlraums (3) als wesentliches Merkmal.

Im Internet wird auf der Seite www.so-mei-to.de ein Pflanztopf gezeigt, der mit Pflanzerde gefüllt ist, die einen derartigen Hohlraum aufweist. Der Pflanztopf ist mit einem aufgesetzten Deckel bzw. Untersetzer nach oben hin verschlossen. Der Deckel wird abgenommen, die den Hohlraum stabilisierende Kunststoffform wird aus dem Topf entfernt, die Pflanze wird mit Wurzelballen eingesetzt und die Erde wird angedrückt.

Die beschriebenen Pflanztöpfe dienen zum Einsetzen einer Pflanze mit Wurzelballen, da sie eine entsprechende Vertiefung für den Wurzelballen aufweisen, die formstabil ausgebildet ist. Eine Aussaat in einen derartigen Pflanztopf ist nicht oder erst nach Auffüllen mit Blumenerde möglich. Zudem ist die Herstellung der Pflanztöpfe aufwendig, da das Einbringen und Stabilisieren des Hohlraums aufwendig ist. Durch das Aufbringen eines Deckels müssen mehrere Teile lösbar miteinander verbunden sein, aber dennoch für den Transport einen ausreichenden Verschluss für den Pflanztopf darstellen. Das beschriebene Pflanztopf-System hat daher keine Marktbedeutung.

Es besteht weiterhin Nachfrage nach einem System zum Setzen (Einpflanzen und Umtopfen) von Pflanzen mit Wurzelballen in Blumentöpfe, das die Nachteile des Standes der Technik vermeidet und in einfacher Weise Pflanz- oder Blumenerde oder Pflanzsubstrat und Blumentopf verbindet.

Die Aufgabe wird erfindungsgemäß gelöst durch einen allseits geschlossenen, mit Pflanzsubstrat und/oder Blumenerde gefüllten Kunststoff-Pflanztopf, mit einem oben offenen Kunststoff-Pflanztopf mit Löchern zum Durchtritt von Überschusswasser am Topfboden, wobei der obere Rand des Kunststoff-Pflanztopfes einen mindestens 3 mm breiten umlaufenden horizontalen Siegelrand aufweist, auf den eine Siegelplatine mit Abziehlasche von Hand abziehbar aufgeschweißt ist, die die obere Öffnung des Kunststoff-Pflanztopfes bedeckt und verschließt, wobei der Bereich des Topfbodens, in dem die Löcher zum Durchtritt von Überschusswasser angeordnet sind, eben ist und von außen mit einer oder mehreren von Hand abziehbar anhaftenden Etiketten abgedeckt ist, und wobei das Pflanzsubstrat und/oder die Blumenerde im Pflanztopf als nicht komprimierte, lose Schüttung vorliegt und keine formstabil eingebrachten oder eingeprägten Pflanzlöcher oder Vertiefungen aufweist.

Es wurde erfindungsgemäß gefunden, dass ein mit Blumenerde und/oder Pflanzsubstrat gefüllter Kunststoff-Pflanztopf mit einem Siegelrand ausgebildet werden kann, auf den eine Siegelplatine mit Abziehlasche aufgeschweißt werden kann, ohne dass im Siegelbereich anhaftendes Pflanzsubstrat bzw. Blumenerde die umlaufende Topfversiegelung verhindert.

Der erfindungsgemäß einzusetzende Pflanztopf kann in seiner Grundform aus dem Stand der Technik bekannt sein: Er wird typischerweise durch Spritzgießen eines Kunststoffmaterials hergestellt, ist oben offen und weist im Boden Löcher auf. Durch diese Löcher kann nach einer späteren Bepflanzung bei einem Wässern der Pflanzung Überschusswasser nach unten aus dem Topf austreten, so dass Staunässe im Bereich des Topfbodens vermieden wird, die ansonsten zu Fäulnis führen könnte.

Der erfindungsgemäß einzusetzende Kunststoffpflanztopf ist dabei so ausgestaltet, dass er am oberen Rand einen mindestens 3 mm breiten umlaufenden horizontalen Siegelrand aufweist. Der Begriff "horizontal" bedeutet, dass beim Auflegen einer flachen Siegelplatine oder einer sonstigen Fläche auf den oberen Topfrand diese ebene Fläche bündig auf dem Siegelrand aufliegt. Bei nach dem Stand der Technik eingesetzten Blumentöpfen ist der obere Rand des Blumentopfes hingegen abgerundet. Der horizontale Siegelrand weist erfindungsgemäß vorzugsweise eine Breite von 3 bis 8 mm, besonders bevorzugt 3 bis 6 mm, insbesondere 4 bis 5 mm auf. Eine derartige Breite ist notwendig und ausreichend, um eine sichere Verschweißung des Kunststoff-Pflanztopfes mit der Siegelplatine zu erreichen.

Die äußerste Kante des Siegelrandes kann erfindungsgemäß nach unten gebogen sein, um eine scharfkantige Außenkante zu vermeiden. Die angegebene Breite bezieht sich auf den horizontalen Teil des Siegelrandes.

Geometrien und Materialstärken des erfindungsgemäß eingesetzten Pflanztopfes können nach üblichen Kriterien gewählt werden. Hierbei ist eine ausreichende Stabilität des Pflanztopfes bei dem Transport, beispielsweise in mehrschichtiger Palettierung, Lagerung und beim Einsatz zu gewährleisten.

Der Pflanztopf kann einen beliebigen geeigneten Querschnitt aufweisen, beispielsweise einen rechteckigen, insbesondere quadratischen oder einen kreisförmigen Querschnitt. Besonders bevorzugt ist ein kreisförmiger Querschnitt. Typischerweise sind die Pflanztöpfe konisch, d. h. die obere Öffnung ist breiter als der Topfboden. Der Winkel der Wände zur Senkrechten beträgt vorzugsweise 5 bis 10 Grad. Dies erlaubt ein einfaches Stapeln der leeren Pflanztöpfe. Der maximale Durchmesser des Pflanztopfes beträgt vorzugsweise 18 bis 40 cm, bevorzugt 20 bis 35 cm, besonders bevorzugt 22 bis 34 cm. Hiermit ist der Durchmesser von der Außenkante des Siegelrandes zur gegenüberliegenden Außenkante des Siegelrandes gemeint. Bei quaderförmigem Querschnitt ist der maximale Durchmesser (die Diagonale) gemeint. Erfindungsgemäße Pflanztöpfe weisen vorzugsweise ein Innenvolumen von 1 bis 10 Liter, besonders bevorzugt 2 bis 8 Liter auf.

Die obere Öffnung des Kunststoffpflanztopfes ist durch eine aufgeschweißte Siegelplatine mit Abziehlasche abgedeckt. Bei der Siegelplatine handelt es sich vorzugsweise um eine im Heißdruckverfahren schweißbare Kunststofffolie, die eine über den Umfang des Pflanztopfes hinaus ausreichende Abziehlasche aufweist, mit der die Siegelplatine von Hand vom Pflanztopf abziehbar ist. Diese Siegelplatine ist vorzugsweise nicht durchsichtig und kann an ihrer äußeren Oberfläche bedruckt sein.

Dicke und Material der Siegelplatine werden nach den praktischen Anforderungen ausgewählt. Die Dicke wird vorzugsweise im Bereich von 50 bis 300 µm, besonders bevorzugt 100 bis 200 µm liegen. Die Siegelplatine verhindert ein Herausfallen des Pflanzsubstrats vor der Anwendung des Pflanztopfes und sollte auch ein Durchstoßen der Siegelplatine bei der Handhabung vor dem Abziehen von Hand weitestgehend verhindern.

Der Begriff "von Hand abziehbar" bedeutet, dass eine aufgebrachte Siegelplatine oder ein aufgebrachtes Etikett vom Menschen ohne übermäßige Kraftanstrengung mit der Hand abgezogen werden kann. Dies ist aus üblichen Haushaltsanwendungen bei Lebensmittelverpackungen bekannt. Auch entsprechende Schweißverfahren (Heißdruckverfahren) sind aus der Lebensmittelverpackungsindustrie bekannt.

Der erfindungsgemäß eingesetzte Pflanztopf weist wie üblich im Bereich des Topfbodens Löcher zum Durchtritt von Überschusswasser auf. Diese sind vor der Anwendung des Pflanztopfes gegen ein Herausfallen von Blumenerde durch ein oder mehrere von Hand abziehbare anhaftende Etiketten, vorzugsweise durch eine Etikette, abgedeckt. Diese Etiketten müssen jedoch nicht wie die Siegelplatine aufgeschweißt sein, sondern können wie aus anderen Anwendungen bekannte ablösbare Etiketten mit einer haftenden Schicht (Klebeschicht) ausgestattet sein. Sie können auch durch Adhäsion anhaften. Die Anhaftung wird so gewählt, dass die Etiketten von Hand abziehbar sind, sich jedoch vor dem bestimmungsgemäßen Einsatz des befüllten Pflanztopfes nicht von alleine ablösen. Im Bereich der Löcher ist der Topfboden eben ausgestaltet, so dass die Löcher in einfacher Weise mit den Etiketten abgedeckt werden können. Auch diese Etiketten können Abziehlaschen aufweisen.

Der Topfboden weist vorzugsweise 1 bis 20, besonders bevorzugt 12 bis 18 Löcher zum Durchtritt von Überschusswasser auf, die vorzugsweise 3 bis 15 %, besonders bevorzugt 5 bis 12 % der Fläche des Topfbodens ausmachen.

Besonders bevorzugt ist eine Ausführungsform, in der alle Löcher im Topfboden von außen mit einem einzigen von Hand abziehbaren anhaftendem Etikett abgedeckt sind. Hierdurch ist es möglich, den gesamten Topfboden mit einem Handgriff freizulegen.

Dazu ist es vorteilhaft, wenn im Wesentlichen der gesamte Topfboden oder der gesamte Topfboden, gegebenenfalls mit Ausnahme eines umlaufenden Stegs, eben ausgebildet ist. Um das Abfließen von Überschusswasser zu erleichtern, ist es vorteilhaft, wenn der ebene Topfboden bei der Anwendung nicht unmittelbar auf einem Untergrund aufliegt, sondern durch einen Steg von ihm beabstandet ist. Vorzugsweise weist deshalb der Topfboden einen, vorzugsweise unterbrochenen, an der Unterseite des Topfbodens den äußeren Umfang des Topfbodens folgend umlaufenden Steg auf. Der Steg kann beispielsweise 2 bis 6, vorzugsweise 3 oder 4 Einkerbungen oder Unterbrechungen aufweisen, die den Austritt von Überschusswasser erleichtern. Die Höhe dieses Stegs kann beispielsweise 1 bis 10 mm betragen. Übliche, bereits am Markt verfügbare Kunststoffpflanztöpfe, welche zum Vorkultivieren von Pflanzen genutzt werden, weisen keinen eben ausgestalteten Topfboden auf.

Ferner können an der Vorder- und/oder Rückseite des Kunststoffpflanztopfes von Hand abziehbare bedruckte Etiketten aufgebracht sein. Diese Etiketten können über Inhalt und Einsatzzweck des Pflanztopfes Auskunft geben. Sofern der Pflanztopf nach der Aussaat oder Bepflanzung in einen Übertopf eingesetzt wird, können diese Etiketten an der Vorder- und Rückseite des Pflanztopfes verbleiben. Bei einer Anwendung ohne zusätzlich Übertopf werden sie vom Anwender abgelöst, um ein einheitliches Erscheinungsbild des Pflanztopfes zu gewährleisten.

Bei der Anwendung löst der Anwender die eine oder mehreren Etiketten vom Topfboden und die Siegelplatine von der oberen Öffnung des Kunststoffpflanztopfes und kann sodann in das Pflanzsubstrat bzw. die Blumenerde Saat einbringen oder Pflanzen einsetzen.

Das Pflanzsubstrat bzw. die Blumenerde liegt im Pflanztopf als nicht komprimierte, lose Schüttung vor. Hierdurch ist sichergestellt, dass sowohl ein Aussäen von Saat als auch das Einbringen von Pflanzen in einfacher Weise möglich sind. Das Befüllen des Pflanztopfes mit dem Pflanzsubstrat bzw. Blumenerde in der Produktion ist durch die lose Schüttung in einfacher Weise möglich.

Anders als im Stand der Technik weist das Pflanzsubstrat bzw. die Blumenerde keine formstabil eingebrachten oder eingeprägten Pflanzlöcher oder Vertiefungen auf, in die beispielsweise Wurzelballen eingesetzt werden und die an die Form eines Vorsaatpflanztopfes angepasst sind. Der Begriff "nicht komprimierte, lose Schüttung" ist so zu verstehen, dass nach einem Entfernen der Siegelplatine das Pflanzsubstrat bzw. die Blumenerde durch einfaches Umdrehen des Pflanztopfes hinausgeschüttet werden kann und nicht erst mit den Fingern oder ein Werkzeug gelöst werden muss. Bei der Anwendung des erfindungsgemäßen Pflanztopfs wird hingegen so vorgegangen, dass in das locker im Pflanztopf eingefüllte Pflanzsubstrat in die locker eingefüllte Blumenerde über den Verwender von Hand ein Pflanzloch ausgeformt wird (leichtes Verstreichen/Verteilen der eingefüllten Blumenerde), in welches dann die zu topfende Pflanze eingesetzt wird. Im Unterschied hierzu wird in verschweißten Folien vertriebene Blumenerde in der Regel gebügelt oder komprimiert, so dass sie vor der Verwendung von Hand oder mit einem Werkzeug aufgelockert werden muss.

Der Pflanztopf kann in beliebiger geeigneter Menge mit dem Pflanzsubstrat bzw. der Blumenerde befüllt sein. Die Menge kann dabei von der Schüttdichte des Pflanzsubstrats bzw. der Blumenerde abhängen. Vorzugsweise sind 60 bis 98 %, besonders bevorzugt 70 bis 95 % des Pflanztopfvolumens mit der Schüttung des Pflanzsubstrats bzw. der Blumenerde gefüllt.

Das Pflanzsubstrat kann dabei aus beliebigen geeigneten Kultursubstraten für Pflanzen gewählt werden. Für die Füllung wird vorzugsweise handelsübliche Blumenerde eingesetzt, die vorzugsweise aus einer Mischung von Hochmoortorf und Düngemitteln besteht. Als Ergänzung zu dieser Mischung können verschiedene Zuschläge, wie Grünkompost, Tongranulate, Perlite, Cocopeat, Holzfaser und Rindenhumus eingesetzt werden, durch deren Einsatz eine optimale Abstimmung auf die Pflanzengruppe möglich ist, für die das Produkt ausgelobt wird. Das Pflanzsubstrat an sich ist aus dem Stand der Technik bekannt.

Vorzugsweise ist dem Pflanzsubstrat ein Düngemittel beigemischt, das die Anfangsdüngung auf einen Zeitraum von bis zu 12 Wochen, besonders bevorzugt von bis zu 12 Wochen gewährleistet. Dabei kann ein beliebiges geeignetes pulver- oder granulatförmiges Düngemittel dem Pflanzsubstrat beigemischt werden.

Bekannt sind beispielsweise mineralische Ein- und Mehrnährstoffdünger wie Stickstoffdünger, Kalidünger, Kalkdünger und Magnesiumdünger. Für eine weitere Beschreibung der Düngemittel kann auf DE-A-10 2006 038 901, Absätze [0025] bis [0036] wie auch auf US 7,587,856 B2 verwiesen werden. Vorzugsweise ist das Düngemittelgranulat ein Langzeit-NPK-Düngemittelgranulat.

Das Pflanzsubstrat kann zudem typische weitere Zusatzstoffe enthalten.

Weitere Zusatzstoffe können beispielsweise Bodenhilfsstoffe wie Gesteinsmehl, Ton, Bentonit, Biolith usw. sein wie auch feuchtigkeitsaufnehmende synthetische Polymere wie sie beispielsweise in US 7,587,856 B2 beschreiben sind. Dabei handelt es sich typischerweise um Oligomere auf Basis von Acrylsäure. Weitere Hilfsstoffe sind in DE-A-10 2006 038 901 in Absatz [0046] beschrieben.

Um über die gesamte Pflanzsaison eine sichere Düngemitteldosierung zu gewährleisten, kann dem erfindungsgemäßen Pflanztopf ein Langzeitdüngemittel in einer für eine Pflanzsaison ausreichenden Menge beigegeben werden.

Die Erfindung betrifft auch ein derartiges Set oder Kit, bestehend aus einem oder mehreren der erfindungsgemäßen gefüllten Pflanztöpfe und mindestens einem separat beiliegendem Langzeitdüngemittel in einer für eine Pflanzsaison ausreichenden Menge oder diese Komponenten enthaltend.

Das Langzeitdüngemittel kann dabei ein an sich bekanntes, z. B. NPK-, Langzeitdüngemittel sein und in beliebiger geeigneter Form vorliegen. Als besonders vorteilhaft haben sich Düngemittelstäbchen erwiesen, die zu festgelegten Zeitpunkten in das Pflanzsubstrat eingedrückt werden.

Diese Langzeitdüngemittel können im Set außerhalb des Pflanztopfes mitgeliefert werden oder auch, separat verpackt, im Pflanztopf auf dem Pflanzsubstrat aufliegen.

Durch die Kombination des für die ersten 8 bis 12 Wochen ausreichenden Düngemittels im Pflanzsubstrat und das zusätzliche Langzeitdüngemittel kann eine optimale Pflanzenversorgung über die gesamte Vegetationsperiode gewährleistet werden. Über- oder Unterdosierung werden zuverlässig verhindert. Auch beim Langzeitdüngemittel wie auch der anfänglichen Düngemittelgabe treten keine Überschuss- oder Restmengen auf, die separat gelagert oder entsorgt werden müssen. Zudem ist keine Anschaffung mehrerer Komponenten eines Pflanzsystems notwendig. Die Fehlerquote bei der Bepflanzung kann damit erheblich gesenkt werden.

Die Erfindung betrifft auch ein Verfahren zur Herstellung eines derartigen allseits geschlossenen, mit Pflanzsubstrat und/oder Blumenerde gefüllten Kunststoff-Pflanztopfes durch Einfüllen von Pflanzsubstrat und/oder Blumenerde in den offenen Kunststoffpflanztopf, nachfolgendes Abblasen des Siegelrandes zur Entfernung von gegebenenfalls dort verbliebenen Pflanzsubstrates und/oder Blumenerde, und nachfolgendes Anschweißen der Siegelplatine auf den Siegelrand nach dem Heißdruckverfahren, wobei die Aufbringung der Etiketten auf den Topfboden und gegebenenfalls die Vorder- und/oder Rückseite des Kunststoff-Pflanztopfes vor, während oder nach dem Einfüllen und Anschweißen erfolgt.

Für die Herstellung der erfindungsgemäßen Pflanztöpfe müssen Töpfe, Siegelplatinen und Etiketten separat bereitgestellt werden, ebenso das Pflanzsubstrat bzw. die Blumenerde. Zur Herstellung ist sodann eine Abfüllmaschine notwendig, die das Einfüllen des Pflanzsubstrats bzw. der Blumenerde, das nachfolgende Abblasen und das Heißdruckverfahren zum Aufbringen der Siegelplatine gewährleistet. Beim Befüllen des Pflanztopfes mit dem Pflanzsubstrat bzw. der Blumenerde wird das Pflanzsubstrat bzw. die Blumenerde typischerweise über einen Einfüllstutzen, der in den Topf eintaucht, in diesen überführt. Dabei wird das Pflanzsubstrat bzw. die Blumenerde nicht ganz bis zum oberen Rand des Pflanztopfes gefüllt, um Platz für einen Wurzelballen zu lassen. Eine Verdichtung des Pflanzsubstrates bzw. der Blumenerde im Pflanztopf, beispielsweise über einen Stempel, erfolgt erfindungsgemäß nicht. Zudem ist eine Etikettieranlage notwendig, mit der die Boden- und Seitenetiketten aufgebracht werden. Für die Lagerung und den Transport werden die gefüllten Pflanztöpfe typischerweise auf Paletten, Halbpaletten oder in Display-Containern konfektioniert, wobei je Lage typischerweise 4 bis 20 Töpfe, vorzugsweise 6 bis 15 Töpfe vorliegen und einzelne Lagen durch eine Zwischenpappe oder ein ähnliches Material voneinander getrennt werden. Die Palettenhöhe liegt vorzugsweise im Bereich von 100 bis 200 cm, insbesondere 160 bis 180 cm.

Durch das Aufbringen der Siegelplatine und der bodenseitigen Etiketten zur Verschließung der Bodenlöcher wird ein allseits geschlossener Pflanztopf bereitgestellt. Der Begriff "allseits geschlossen" bedeutet hierbei, dass keine Feuchtigkeit oder Erde in den geschlossenen Pflanztopf hinein oder aus im herausgelangen kann.

Es wird erfindungsgemäß möglich, Pflanzsubstrat bzw. Blumenerde und Pflanztopf zusammenzuführen und in Menge und Ausgestaltung aufeinander abzustimmen. Die lockere und luftige Struktur des Pflanzsubstrats bzw. der Blumenerde ermöglicht eine optimale Wasseraufnahme nach der Aussaat oder Bepflanzung.

## Patentansprüche

1. Allseits geschlossener, mit Pflanzsubstrat und/oder Blumenerde gefüllter Kunststoff-Pflanztopf, mit einem oben offenen Kunststoff-Pflanztopf mit Löchern zum Durchtritt von Überschusswasser am Topfboden, wobei der obere Rand des Kunststoff-Pflanztopfes einen mindestens 3 mm breiten umlaufenden horizontalen Siegelrand aufweist, auf den eine Siegelplatine mit Abziehlasche von Hand abziehbar aufgeschweißt ist, die die obere Öffnung des Kunststoff-Pflanztopfes bedeckt und verschließt, wobei der Bereich des Topfbodens, in dem die Löcher zum Durchtritt von Überschusswasser angeordnet sind, eben ist und von außen mit einer oder mehreren von Hand abziehbar anhaftenden Etiketten abgedeckt ist, und wobei das Pflanzsubstrat und/oder die Blumenerde im Pflanztopf als nicht komprimierte, lose Schüttung vorliegt und keine formstabil eingebrachten oder eingeprägten Pflanzlöcher oder Vertiefungen aufweist.

2. Pflanztopf nach Anspruch 1, **dadurch gekennzeichnet, dass** der horizontale Siegelrand 3 bis 8 mm, vorzugsweise 3 bis 6 mm, insbesondere 4 bis 5 mm breit ist.

3. Pflanztopf nach Anspruch 1 oder 2, **dadurch gekennzeichnet, dass** die Siegelplatine aus einer im Heißdruckverfahren schweißbaren Kunststofffolie aufgebaut ist, die vorzugsweise nicht durchsichtig ist und deren äußere Oberfläche vorzugsweise bedruckt ist.

4. Pflanztopf nach einem der Ansprüche 1 bis 3, **dadurch gekennzeichnet, dass** an der Vorder- und/oder Rückseite des Kunststoff-Pflanztopfes von Hand abziehbare bedruckte Etiketten aufgebracht sind.

5. Pflanztopf nach einem der Ansprüche 1 bis 4, **dadurch gekennzeichnet, dass** er mit Blumenerde gefüllt ist.

6. Pflanztopf nach einem der Ansprüche 1 bis 5, **dadurch gekennzeichnet, dass** dem Pflanzsubstrat und/oder der Blumenerde ein Düngemittel beigemischt ist.

7. Pflanztopf nach einem der Ansprüche 1 bis 6, **dadurch gekennzeichnet, dass** der maximale Durchmesser des Pflanztopfes 18 bis 40 cm, vorzugsweise 22 bis 34 cm, beträgt.

8. Pflanztopf nach einem der Ansprüche 1 bis 7 **dadurch gekennzeichnet, dass** 60 bis 98 %, vorzugsweise 70 bis 95 % des Pflanztopf-Volumens mit der Schüttung des Pflanzsubstrats und/oder der Blumenerde gefüllt sind.

9. Pflanztopf nach einem der Ansprüche 1 bis 8, **dadurch gekennzeichnet, dass** der Topfboden 12 bis 18 Löcher zum Durchtritt von Überschusswasser aufweist, die vorzugsweise 3 bis 15 % der Fläche des Topfbodens ausmachen.

10. Pflanztopf nach einem der Ansprüche 1 bis 9, **dadurch gekennzeichnet, dass** alle Löcher im Topfboden von außen mit einem einzigen von Hand abziehbaren anhaftenden Etikett abgedeckt sind.

11. Pflanztopf nach einem der Ansprüche 1 bis 10, **dadurch gekennzeichnet, dass** im Wesentlichen der gesamte Topfboden eben ausgebildet ist und einen, vorzugsweise unterbrochenen, an der Unterseite des Topfbodens dem äußeren Umfang des Topfbodens folgend umlaufenden Steg aufweist.

12. Verfahren zur Herstellung eines allseits geschlossenen, mit Pflanzsubstrat und/oder Blumenerde gefüllten Kunststoff-Pflanztopfes nach einem der Ansprüche 1 bis 11 durch Einfüllen von Pflanzsubstrat und/oder Blumenerde in den offenen Kunststoffpflanztopf, nachfolgendes Abblasen des Siegelrandes zur Entfernung von gegebenenfalls dort verbliebenen Pflanzsubstrates und/oder Blumenerde, und nachfolgendes Anschweißen der Siegelplatine auf den Siegelrand nach dem Heißdruckverfahren, wobei die Aufbringung der Etiketten auf den Topfboden und gegebenenfalls die Vorder- und/oder Rückseite des Kunststoff-Pflanztopfes vor, während oder nach dem Einfüllen und Anschweißen erfolgt.

13. Set aus einem oder mehreren allseits geschlossenen, mit Pflanzsubstrat und/oder Blumenerde gefüllten Kunststoff-Pflanztöpfen nach einem der Ansprüche 1 bis 11 und mindestens einem separat beiliegendem Langzeitdüngemittel in einer für eine Pflanzsaison ausreichenden Menge.
